# EUROPÄISCHE PATENTSCHRIFT

(11) **EP 2 608 980 B1**
(45) Veröffentlichungstag und Bekanntmachung des Hinweises auf die Patenterteilung: **25.07.2018**
(21) Anmeldenummer: 11714533.4
(22) Anmeldetag: 12.04.2011
(51) Int. Cl.: B60L 9/30, B60L 9/22

(54) **MEHRSYSTEM-TRAKTIONSSTROMRICHTER**
MULTI-SYSTEM TRACTION POWER CONVERTER
CONVERTISSEUR DE COURANT DE TRACTION POLYCOURANT

(30) Priorität: 24.08.2010 DE 102010039697
(43) Veröffentlichungstag der Anmeldung: 03.07.2013
(73) Patentinhaber: Siemens Aktiengesellschaft, 80333 München (DE)
(72) Erfinder: WEIGEL, Jan, 91077 Großenbuch (DE)
(86) Internationale Anmeldenummer: PCT/EP2011/055671
(87) Internationale Veröffentlichungsnummer: WO 2012/025254

(56) Entgegenhaltungen:
- EP-A1- 0 384 222
- EP-A2- 1 226 994
- WO-A1-03/047904
- BAKRAN M M ET AL: "Comparison of multisystem traction converters for high-power locomotives", POWER ELECTRONICS SPECIALISTS CONFERENCE, 2004. PESC 04. 2004 IEEE 35TH ANNUAL, AACHEN, GERMANY 20-25 JUNE 2004, PISCATAWAY, NJ, USA,IEEE, US, 20. Juni 2004 (2004-06-20), Seiten 697-703VOL.1, XP010738071, DOI: 10.1109/PESC.2004.1355833 ISBN: 978-0-7803-8399-9

## Beschreibung

Die Erfindung bezieht sich auf einen Mehrsystem-Traktionsstromrichter gemäß Oberbegriff des Anspruchs 1.

Ein netzfrequent trafoloser Traktionsstromrichter ist aus der Veröffentlichung mit dem Titel "15kV/16.7Hz Energy Supply System with Medium Frequency Transformer and 6.5kV IGBTs in Resonant Operation" von B. Engel, M. Victor, G. Bachmann und A. Falk, veröffentlicht im Konferenzband der EPE-Konferenz 2003 in Toulouse, bekannt. Ein derartiger Traktionsstromrichter weist netzseitig eine Einspeisevorrichtung und lastseitig einen selbstgeführten Pulsstromrichter auf, an deren Ausgängen ein Antriebsmotor angeschlossen ist. Gemäß Figur 2 dieser Veröffentlichung weist die Einspeisevorrichtung netzseitig eine Vielzahl von Stromrichter-Gruppen, einen Mittelfrequenz-Transformator und einen Ausgangs-Stromrichter auf. Der Mittelfrequenz-Transformator weist eine Vielzahl von Primärwicklungen und eine Sekundärwicklung auf, die mittels eines Kerns magnetisch miteinander gekoppelt sind. Jede Stromrichter-Gruppe ist transformatorseitig mit einer Primärwicklung verschaltet. Netzseitig weist jede Stromrichter-Gruppe einen Vierquadrantensteller auf. Diese Stromrichter-Gruppen sind netzseitig in Reihe geschaltet. Dadurch teilt sich eine Netzspannung von beispielsweise 15kV, 16.7Hz gleichmäßig in Teilspannungen auf. Transformatorseitig weist jede Stromrichter-Gruppe einen Serien-Resonanz-Stromrichter auf. Dieser Serien-Resonanz-Stromrichter weist einen Serienkondensator auf, der mit einer Streuinduktivität einer zugeordneten Primärwicklung einen Serienresonanzkreis bildet. Mittels dieser Stromrichter-Gruppen wird die Netzfrequenz von 16.7Hz in eine höherfrequente Transformatorfrequenz von beispielsweise 5kHz umgewandelt. Mittels dieser netzseitigen Einspeisevorrichtung eines Traktionsstromrichters wird ein ansonsten verwendeter Traktionstransformator ersetzt, der insbesondere bei einer Netzfrequenz von 16.7Hz groß und schwer ist. Die Transformatorfrequenz in Höhe von 5kHz ist ein technischer realistischer Kompromiss zwischen Volumen und Gewicht des Mittelfrequenz-Transformators und den Schaltverlusten.

Aus der EP 1 226 994 A2 ist ebenfalls ein netzfrequent trafoloser Traktionsstromrichter bekannt, der außerdem von einer Netzgleichspannung in Höhe von 1,5kV oder 3kV gespeist werden kann. Gemäß Figur 8 dieser EP-Offenlegungsschrift wird eine niedrige Netzgleichspannung in Höhe von 1,5kV mittels eines Schaltgeräts direkt mit den gleichspannungsseitigen Ausgängen des Ausgangs-Stromrichters der Einspeisevorrichtung verknüpft. An diesen Ausgängen ist ein Gleichspannungs-Zwischenkreis angeschlossen, an dem der lastseitige selbstgeführte Pulsstromrichter des Traktionsstromrichters gleichspannungsseitig angeschlossen ist. Mittels des Schaltgeräts wird eine positive Potentialschiene des Spannungszwischenkreises mittels eines Stromabnehmers mit einer Netzgleichspannung von beispielsweise 1,5kV, die an einer Fahrleitung ansteht, verbunden. Eine negative Potentialschiene ist mit einem Antriebsrad eines schienengebundenen Fahrzeugs, das mittels einer Schiene geerdet ist, verbunden. Durch eine Umkonfigurierung der Stromrichter-Gruppen der netzseitigen Einspeisevorrichtung von einer Reihenschaltung in eine Parallelschaltung kann diese Schaltung auch vorteilhaft an eine Netzspannung von 3kV betrieben werden. Dieser Traktionsstromrichter kann an Wechselspannungen von 15kV, 16.7Hz oder 25kV, 50Hz und an einer Gleichspannung von 1,5kV oder 3kV betrieben werden.

Nachteil dieser Einspeiseschaltung besteht darin, dass eine Vielzahl von mechanischen Schaltern verwendet werden müssen, um die netzseitigen Stromrichter-Gruppen dieser Einspeiseschaltung von einer Reihenschaltung in eine Parallelschaltung umzukonfigurieren.

Beträgt die Amplitude einer Zwischenkreisspannung eines Traktionsstromrichters 3kV, werden als abschaltbare Leistungshalbleiterschalter eines lastseitigen selbstgeführten Pulsstromrichters 6,5kV-IGBTs verwendet, wogegen bei einer Amplitude der Zwischenkreisspannung in Höhe von 1,5kV 3,3kV-IGBTs verwendet werden. Beträgt die Amplitude der Zwischenkreisspannung 3kV kann dieser bekannte Traktionsstromrichter nicht an allen vier Bahnspannungssystemen betrieben werden, so dass es sich bei diesem Traktionsstromrichter nicht um einen Mehrsystem-Traktionsstromrichter mit voller Mehrsystemfähigkeit handelt.

Der Erfindung liegt nun die Aufgabe zugrunde, diesen bekannten Traktionsstromrichter derart weiterzubilden, dass dieser an allen vier bekannten Bahnspannungssystemen betrieben werden kann.

Diese Aufgabe wird im Zusammenhang mit den Merkmalen des Oberbegriffs mit den kennzeichnenden Merkmalen des Anspruchs 1 erfindungsgemäß gelöst.

Dadurch, dass ein weiterer Ausgangs-Stromrichter vorgesehen ist, der wechselspannungsseitig mit einer weiteren Sekundärwicklung des Mittelfrequenz-Transformators verknüpft ist, sind diese beiden Ausgangs-Stromrichter wechselspannungsseitig miteinander verkoppelt. Außerdem sind zwei Schaltgeräte vorgesehen, mit denen die beiden Ausgangs-Stromrichter in Abhängigkeit einer Fahrleitungsspannung gleichspannungsseitig in eine Parallel- oder Reihenschaltung umkonfigurierbar sind. Dadurch wird eine Anschaltung an eine Netzgleichspannung in Höhe von 1,5kV als auch von 3kV ermöglicht.

Zur weiteren Erläuterung der Erfindung wird auf die Zeichnung Bezug genommen, in der zwei Ausführungsformen des erfindungsgemäßen Mehrsystem-Traktionsstromrichters schematisch veranschaulicht sind.
- FIG 1: zeigt ein Prinzipschaltbild eines bekannten Traktionsstromrichters und in den
- FIG 2 bis 4: sind eine erste Ausführungsform eines erfindungsgemäßen Mehrsystem-Traktionsstromrichters an unterschiedlichen Fahrleitungsspannungen dargestellt, wobei in den
- FIG 5 bis 7: eine zweite Ausführungsform des erfindungsgemäßen Mehrsystem-Traktionsstromrichters an unterschiedlichen Fahrleitungsspannungen schematisch dargestellt sind.

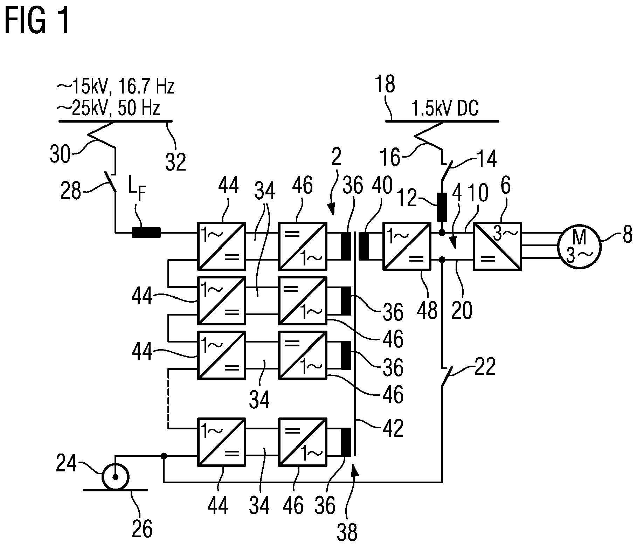

Die FIG 1 zeigt ein Prinzipschaltbild eines aus der EP 1 226 994 A2 bekannten Traktionsstromrichters. Dieser bekannte netzfrequent trafoloser Traktionsstromrichter weist netzseitig eine Einspeisevorrichtung 2 auf, die gleichspannungsseitig mittels eines Spannungszwischenkreises 4 mit einem lastseitigen selbstgeführten Pulsstromrichter 6 verknüpft ist, an dessen Ausgängen ein Antriebsmotor 8 angeschlossen ist. Eine positive Potentialschiene 10 des Spannungszwischenkreises 4 ist mittels einer Drossel 12 und eines Schützes 14 mit einem Stromabnehmer 16 verbindbar, der im elektrischen Kontakt mit einer Fahrleitung 18 ist, an dem eine Netzgleichspannung in Höhe von beispielsweise 1,5kV ansteht. Eine negative Potentialschiene 20 des Gleichspannungs-Zwischenkreises 4 ist mittels eines weiteren Schützes 22 mit einem Antriebsrad 24 eines schienengebundenen Fahrzeugs elektrisch leitend verbunden, das mittels einer Schiene 26 geerdet ist.

Die Einspeisevorrichtung 2 ist netzseitig mittels einer Eingangsdrossel L_{F}, eines Schützes 28 und eines Stromabnehmers 30 mit einer Fahrleitung 32 verbindbar, an dem entweder eine Netzwechselspannung von 15kV, 16.7Hz oder von 25kV, 50Hz ansteht. Diese Einspeisevorrichtung 2 weist netzseitig eine Vielzahl von elektrisch in Reihe geschalteten Stromrichter-Gruppen 34 auf, die lastseitig jeweils mit einer Primärwicklung 36 eines Mittelfrequenz-Transformators 38 verknüpft sind. Diese Vielzahl von Primärwicklungen 36 und eine Sekundärwicklung 40 dieses Mittelfrequenz-Transformators 38 sind gemeinsam auf einem magnetischen Kern 42 angeordnet. Dadurch sind diese Primärwicklungen 36 und die Sekundärwicklung 40 miteinander magnetisch gekoppelt. Jede Stromrichter-Gruppe 34 weist netzseitig einen Vierquadrantensteller 44 und transformatorseitig einen Resonanz-Stromrichter 46 auf, wobei dieser gleichspannungsseitig mit gleichspannungsseitigen Anschlüssen des Vierquadrantenstellers 44 verbunden ist. Realisierungsvorschläge des Vierquadrantenstellers 44 und des Resonanz-Stromrichters 46 sind der EP-Offenlegungsschrift bzw. der eingangs genannten Veröffentlichung entnehmbar. Diese Einspeisevorrichtung 2 weist ausgangsseitig außerdem einen Ausgangs-Stromrichter 48 auf, der wechselspannungsseitig elektrisch an die Sekundärwicklung 40 des Mittelfrequenz-Transformators 38 geschaltet ist. Gemäß der EP-Offenlegungsschrift bzw. der eingangs genannten Veröffentlichung ist dieser Ausgangs-Stromrichter 48 als Vierquadrantensteller ausgebildet. Seine gleichspannungsseitigen Anschlüsse, die jeweils einen Ausgang der Einspeiseschaltung bildet, sind mit der positiven und der negativen Potentialschiene 10 und 20 des Gleichspannungs-Zwischenkreises 4 des Traktionsstromrichters elektrisch leitend verbunden.

Mittels dieser Einspeisevorrichtung 2 wird aus einer Netzwechselspannung von 25kV, 50Hz, insbesondere einer Netzgleichspannung von 15kV, 16.7Hz, eine Gleichspannung in Höhe von 1,5kV bzw. 3kV generiert, wobei auf einen herkömmlichen Traktionstransformator verzichtet wird. Aus dieser generierten Gleichspannung 1,5kV oder 3kV wird mittels des selbstgeführten Pulsstromrichters 6 eine dreiphasige Wechselspannung mit variabler Amplitude und Frequenz zur Speisung des Antriebsmotors 8 eines schienengebundenen Fahrzeugs generiert.

Da die Zwischenkreisspannung amplitudenmäßig einer Netzgleichspannung in Höhe von 1,5kV bzw. 3kV entspricht, kann diese Netzgleichspannung direkt in den Spannungszwischenkreis 4 des Traktionsstromrichters eingespeist werden. Es kann bei dieser Ausführungsform nur die Netzspannung in Höhe von 1,5kV oder 3kV eingespeist werden. Ist der lastseitige selbstgeführte Pulsstromrichter 6 für eine Eingangs-Gleichspannung in Höhe von 1,5kV oder 3kV dimensioniert, kann nur eine Netzgleichspannung, die amplitudenmäßig kleiner gleich dieser Eingangs-Gleichspannung entspricht, verwendet werden. Die Verwendung der zweiten Netzgleichspannung ist dann ohne zusätzliche Wandlerschaltungen nicht mehr möglich.

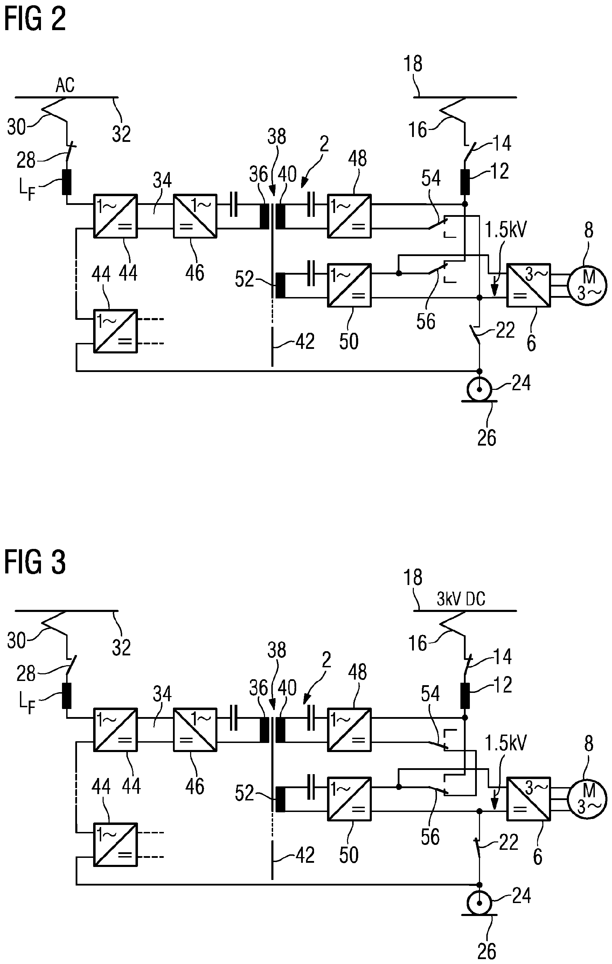

In den FIG 2 bis 4 ist jeweils eine erste Ausführungsform eines Mehrsystem-Traktionsstromrichters nach der Erfindung bei unterschiedlichen Netzspannungs-Einspeisungen und einer Zwischenkreis-Gleichspannungen in Höhe von 1,5kV dargestellt. Wegen der Übersichtlichkeit sind von der Einspeisevorrichtung 2 gemäß Figur 1 nur eine Stromrichter-Gruppe 34 und der gleichspannungsseitige Ausgangs-Stromrichter 48 dargestellt. Erfindungsgemäß weist dieser Mehrsystem-Traktionsstromrichter einen zweiten Ausgangs-Stromrichter 50 auf, der wechselspannungsseitig mit einer zweiten Sekundärwicklung 52 verknüpft ist. Diese zweite Sekundärwicklung 52 ist ebenfalls wie die übrigen Wicklungen 36 und 40 auf den magnetischen Kern 42 des Mittelfrequenz-Transformators 38 angeordnet. Außerdem sind zwei Schaltgeräte 54 und 56 vorgesehen. Mittels dieser beiden Schaltgeräte 54 und 56 sind die beiden Ausgangs-Stromrichter 48 und 50 gleichspannungsseitig in eine Parallel- oder Reihenschaltung umkonfigurierbar.

In der FIG 2 wird dieser Mehrsystem-Traktionsstromrichter an einer der beiden möglichen Netzwechselspannungen betrieben. Bei einer Wechselspannungs-Einspeisung sind die beiden Ausgangs-Stromrichter 48 und 50 der Einspeisevorrichtung 2 gleichspannungsseitig elektrisch parallel geschaltet. Diese gleichspannungsseitige Parallelschaltung der beiden Ausgangs-Stromrichter 48 und 50 wird dadurch erreicht, dass ein positiver Gleichspannungs-Ausgang des Ausgangs-Stromrichters 48 mit einem ersten Eingang des Schaltgeräts 56 verknüpft ist, wobei dessen Ausgang mit einem positiven Gleichspannungs-Ausgang des zweiten Ausgangs-Stromrichters 50 und mit einem positiven Gleichspannungs-Anschluss des selbstgeführten Pulsstromrichters 6 elektrisch leitend verbunden sind. Ein negativer Gleichspannungs-Ausgang des ersten Ausgangs-Stromrichters 48 ist mit einem Ausgang des Schaltgeräts 54 elektrisch leitend verbunden, dessen erster Eingang mit einem negativen Gleichspannungs-Ausgang des zweiten Ausgangs-Stromrichters 50 und mit einem positiven Gleichspannungs-Anschluss des selbstgeführten Pulsstromrichters 6 elektrisch leitend verbunden ist. Die beiden Schaltgeräte 54 und 56 befinden sich somit in einer ersten von drei möglichen Schaltpositionen. Die beiden Schütze 14 und 22 sind bei einer Wechselspannungs-Einspeisung geöffnet. Der selbstgeführte Pulsstromrichter 6 ist in dieser Ausführungsform für eine Eingangs-Gleichspannung in Höhe von 1,5kV dimensioniert. Die beiden Ausgangs-Stromrichter 48 und 50 liefern jeweils eine derartige Gleichspannung in Höhe von 1,5kV.

In der FIG 3 ist der Mehrsystem-Traktionsstromrichter nach der Erfindung für eine Gleichspannungs-Einspeisung in Höhe von 3kV dargestellt. Da der selbstgeführte Pulsstromrichter 6 nur für eine Eingangs-Gleichspannung in Höhe von 1,5kV dimensioniert ist, muss die Netzgleichspannung halbiert werden. Dazu werden die beiden Ausgangs-Stromrichter 48 und 50 gleichspannungsseitig elektrisch in eine Reihenschaltung umkonfiguriert. Dazu werden die beiden Schaltgeräte 54 und 56 in ihre zweite Schaltposition gebracht. Das heißt, der zweite Eingang des Schaltgeräts 56 ist mit einem zweiten Eingang des Schaltgeräts 54 verknüpft. Außerdem sind die Schütze 14 und 22 geschlossen, so dass der Stromabnehmer 16 mittels des Schützes 14 und der Drossel 12 mit einem positiven Gleichspannungs-Ausgang des ersten Ausgangs-Stromrichters 48 verbunden ist. Der negative Gleichspannungs-Ausgang des zweiten Ausgangs-Stromrichters 50 und der Gleichspannungs-Anschluss des selbstgeführten Pulsstromrichters 6 ist mittels des Schützes 22 mit dem Antriebsrad 24 eines schienengebundenen Fahrzeugs, das mittels einer Schiene 26 geerdet ist, verknüpft. Durch die gleichspannungsseitige Serienschaltung der beiden Ausgangs-Stromrichter 48 und 50 wird die Netzgleichspannung in Höhe von 3kV für den lastseitigen selbstgeführten Pulsstromrichter 6 halbiert. Der Leistungsfluss ist über die magnetisch gekoppelten Sekundärwicklungen 40 und 52 geschlossen.

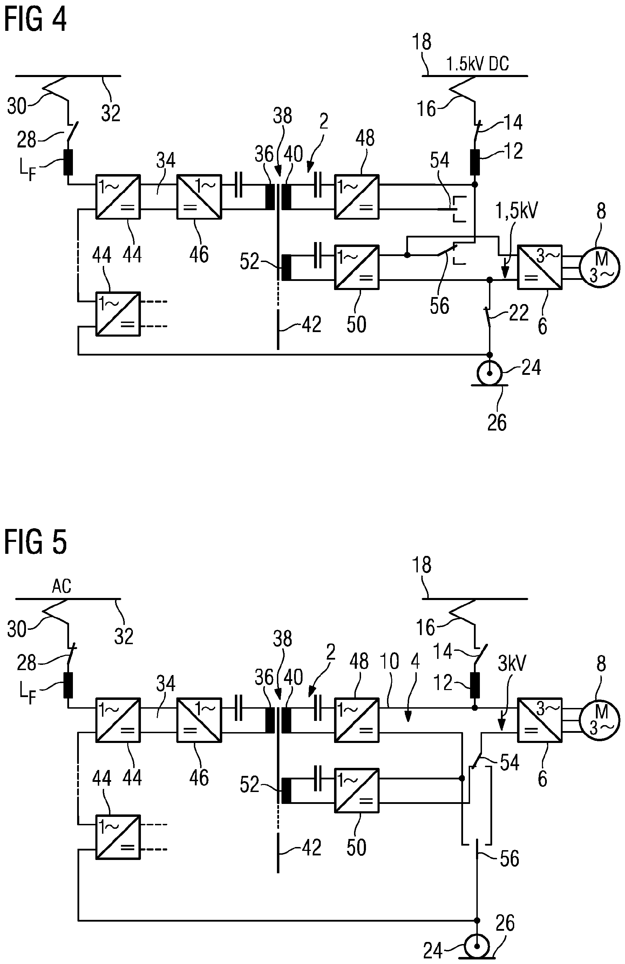

Die FIG 4 zeigt den Mehrsystem-Traktionsstromrichter nach der Erfindung bei einer Gleichspannungs-Einspeisung in Höhe von 1,5kV. Diese Netzgleichspannung entspricht amplitudenmäßig der Eingangs-Gleichspannung des selbstgeführten Pulsstromrichters 6 und damit ebenfalls der Gleichspannung des Gleichspannungs-Zwischenkreises 4 des Traktionsstromrichters. Aus diesem Grund wird der lastseitige selbstgeführte Pulsstromrichter 6 in den Gleichspannungspfad geerdeten, der gebildet wird von der Fahrleitung 18, dem Schütz 14, der Drossel 12, den beiden Gleichspannungs-Anschlüssen des lastseitigen selbstgeführten Pulsstromrichters 6 und dem Antriebsrad 24 eines schienengebundenen Fahrzeugs, der mittels einer Schiene 26 geerdet ist. Dazu wird das Schaltgerät 54 in seine dritte Schaltposition, nämlich der neutralen Schaltposition, gebracht, wogegen das Schaltgerät 56 wieder in seine erste Schaltposition gesteuert wird. Das heißt, die Fahrleitung 18 ist mittels des Schützes 14 und der Drossel 12 und einem ersten Eingang des Schaltgeräts 56 mit einem positiven Gleichspannungs-Anschluss des lastseitigen selbstgeführten Pulsstromrichters 6 verbunden.

Mit einer Einspeisung mit einer Netzgleichspannung von 1,5kV oder 3kV ist das Schütz 28 geöffnet, so dass an den elektrisch in Reihe geschalteten Stromrichter-Gruppen 34 keine Spannung ansteht.

In den FIG 5 bis 7 ist jeweils eine zweite Ausführungsform eines Mehrsystem-Traktionsstromrichters nach der Erfindung bei unterschiedlichen Netzspannungs-Einspeisungen und einer Zwischenkreis-Gleichspannung in Höhe von 3kV schematisch dargestellt. Auch bei diesen Darstellungen ist wegen der Übersichtlichkeit von der Einspeisevorrichtung 2 gemäß Figur 1 nur eine Stromrichter-Baugruppe 34 und der gleichspannungsseitige Ausgangs-Stromrichter 48 dargestellt. Auch die Einspeisevorrichtung 2 dieser zweiten Ausführungsform des Mehrsystem-Traktionsstromrichters nach der Erfindung weist einen zweiten Ausgangs-Stromrichter 50 auf, der ebenfalls wechselspannungsseitig mit einer auf den Kern 42 des Mittelfrequenz-Transformators 38 aufgebrachten zweiten Sekundärwicklung 52 elektrisch leitend verbunden ist. Zur Umkonfigurierung der beiden Ausgangs-Stromrichter 48 und 50 der Einspeisevorrichtung 2 gleichspannungsseitig in eine Parallel- oder Serienschaltung sind zwei Schaltgeräte 54 und 56 vorgesehen, die aber gegenüber der ersten Ausführungsform anders verschaltet sind.

Das Schaltgerät 54 ist ausgangsseitig mit einem negativen Gleichspannungs-Anschluss des lastseitigen selbstgeführten Pulsstromrichters 6 elektrisch leitend verbunden, wobei dessen erster Eingang mit einem negativen Gleichspannungs-Ausgang des zweiten Ausgangs-Stromrichters 50 verknüpft ist. Der zweite Eingang dieses Schaltgeräts 54 ist mit einem ersten Eingang des Schaltgeräts 56 verknüpft, dessen Ausgang mit dem Antriebsrad 22 eines schienengebundenen Fahrzeugs elektrisch leitend verbunden ist. Der zweite Eingang dieses Schaltgeräts 56 ist elektrisch leitend mit einem negativen Gleichspannungs-Ausgang des ersten Ausgangs-Stromrichters 48 und mit einem positiven Gleichspannungs-Ausgang des zweiten Ausgangs-Stromrichters 50 der Einspeisevorrichtung 2 verbunden. Durch diese in den FIG 5 bis 7 gezeigte Verschaltung der beiden Schaltgeräte 54 und 56 wird gegenüber der ersten Ausführungsform gemäß der FIG 2 bis 4 das Schütz 22 eingespart.

Bei dieser zweiten Ausführungsform der Einspeisevorrichtung 2 eines Mehrsystem-Traktionsstromrichters nach der Erfindung weist ein Gleichspannungs-Zwischenkreis 4 des Traktionsstromrichters eine Gleichspannung mit einer Amplitude von 3kV auf. Aus diesem Grund verwendet der lastseitige selbstgeführte Pulsstromrichter 6 als abschaltbare Leistungshalbleiterschalter 6.5kV-IGBTs anstelle von 3,3kV IGBTs. In FIG 5 ist der Mehrsystem-Traktionsstromrichter nach der Erfindung bei einer Einspeisung mit einer Netzwechselspannung von 25kV, 50Hz oder 15kV, 16.7Hz dargestellt. Bei einer Einspeisung mit einer Netzwechselspannung sind die beiden Ausgangs-Stromrichter 48 und 50 der Einspeisevorrichtung 2 gleichspannungsseitig elektrisch parallel geschaltet. Diese Parallelschaltung wird erreicht, wenn das Schaltgerät 54 in seiner ersten Schaltposition gesteuert ist. Das heißt, der negative Gleichspannungs-Anschluss des lastseitigen selbstgeführten Pulsstromrichters 6 ist mit dem negativen Gleichspannungs-Ausgang des zweiten Ausgangs-Stromrichters 50 der Einspeisevorrichtung 2 verknüpft. Das Schaltgerät 56 befindet sich zu diesem Zeitpunkt in eine neutrale Schaltposition, seine dritte Schaltposition. Das Schütz 28 ist geschlossen, so dass die Netzwechselspannung der Fahrleitung 32 an den elektrisch in Reihe geschalteten Stromrichter-Gruppen 34 ansteht.

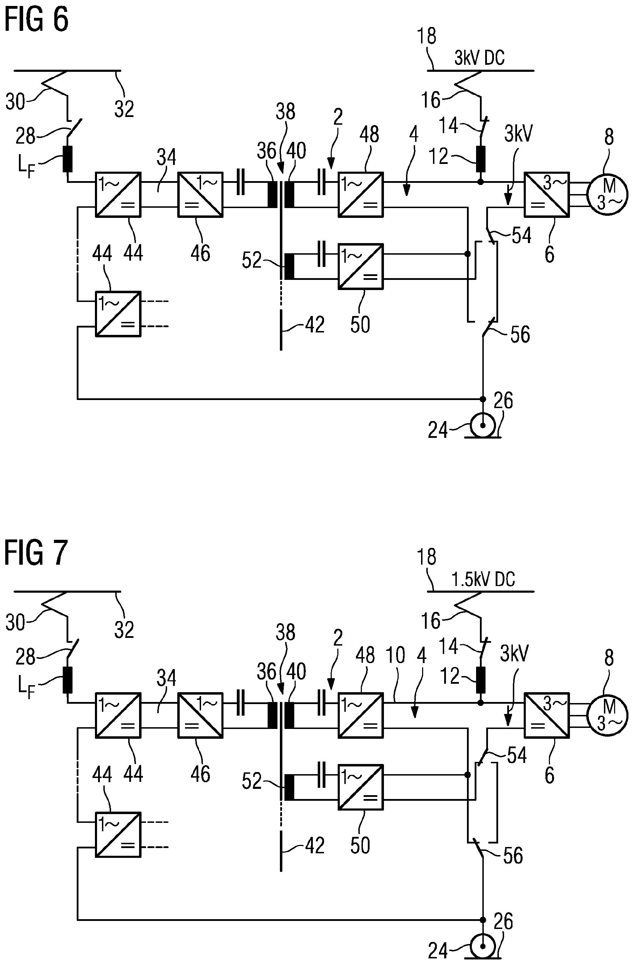

In der FIG 6 ist der Traktionsstromrichter nach der Erfindung bei einer Einspeisung einer Netzgleichspannung mit einer Amplitude von 3kV dargestellt. Diese Netzgleichspannung entspricht amplitudenmäßig der Eingangs-Gleichspannung des lastseitigen selbstgeführten Pulsstromrichters 6 und damit der Gleichspannung des Zwischenkreises 4. Wegen der amplitudenmäßigen Übereinstimmung kann die Netzgleichspannung direkt am lastseitigen selbstgeführten Pulsstromrichter 6 angelegt werden. Dazu wird das Schaltgerät 54 in seine zweite Schaltposition gesteuert. Das heißt, der Gleichspannungs-Anschluss des lastseitigen selbstgeführten Pulsstromrichters 6 ist mittels des zweiten Eingangs des Schaltgeräts 54 mit dem Antriebsrad 24 verbunden. Das zweite Schaltgerät 56 ist dabei in einer ersten Schaltposition gesteuert.

In FIG 7 ist der Traktionsstromrichter nach der Erfindung bei einer Einspeisung einer Netzgleichspannung mit einer Amplitude von 1,5kV dargestellt. Diese Netzgleichspannung ist amplitudenmäßig halb so groß wie die Gleichspannung des Gleichspannungs-Zwischenkreises 4 und damit der Eingangs-Gleichspannung des lastseitigen selbstgeführten Pulsstromrichters 6. Damit dieser lastseitige selbstgeführte Pulsstromrichter 6 betrieben werden kann, muss die Netzgleichspannung amplitudenmäßig verdoppelt werden. Dazu wechselt das Schaltgerät 54 wieder in seine erste Schaltposition und das Schaltgerät 56 in seine zweite Schaltposition. Dadurch ist der negative Gleichspannungs-Anschluss des lastseitigen selbstgeführten Pulsstromrichters 6 mit dem negativen Gleichspannungs-Ausgang des zweiten Ausgangs-Stromrichters 50 der Einspeisevorrichtung 2 verbunden, wogegen das Antriebsrad mit dem positiven Gleichspannungs-Ausgang des zweiten Ausgangs-Stromrichters 50 und mit dem negativen Gleichspannungs-Ausgang des ersten Ausgangs-Stromrichters 48 der Einspeisevorrichtung 2 verknüpft ist. Der positive Gleichspannungs-Ausgang des ersten Ausgangs-Stromrichters 48 der Einspeisevorrichtung 2 und der positive Gleichspannungs-Anschluss des lastseitigen selbstgeführten Pulsstromrichters 6 sind mittels der positiven Potentialschiene 10 des Gleichspannungs-Zwischenkreises 4 miteinander verknüpft, wobei die Drossel 12 mit einem Anschluss mit dieser positiven Potentialschiene 10 verbunden ist. Dadurch, dass diese beiden Schaltgeräte 54 und 56 in den angegebenen Schaltpositionen gesteuert sind, addieren sich die an den beiden Ausgangs-Stromrichtern 48 und 50 generierten Gleichspannungen mit jeweils einer Amplitude von 1,5kV zur Gleichspannung des Gleichspannungs-Zwischenkreises 4 mit einer Amplitude von 3kV.

Durch die erfindungsgemäße Weiterbildung des Traktionsstromrichters mit einer Einspeisevorrichtung 2 mit einem Mittelfrequenz-Transformator 38 kann dieser Traktionsstromrichter mit den gängigen Bahnnetzspannungen 25kV, 50Hz; 15kV, 16.7Hz; 3kV und 1,5kV betrieben werden. Somit wird aus dem bekannten Traktionsstromrichter mit einer Einspeisevorrichtung 2 mit einem Mittelfrequenz-Transformator 38 ein voller Mehrsystem-Traktionsstromrichter.

## Patentansprüche

1. Mehrsystem-Traktionsstromrichter mit einer netzseitigen Einspeisevorrichtung (2), einem lastseitigen selbstgeführten Pulsstromrichter (6) und einem Gleichspannungs-Zwischenkreis (4), wobei diese Einspeisevorrichtung (2) eine Vielzahl von Stromrichter-Gruppen (34), einen Mittelfrequenz-Transformator (38) mit einer Vielzahl von Primärwicklungen (36) und einer Sekundärwicklung (40) und einen Ausgangs-Stromrichter (48) aufweist, wobei diese Stromrichter-Gruppen (34) netzseitig elektrisch in Reihe geschaltet sind und transformatorseitig jeweils mit einer Primärwicklung (36) verknüpft sind, wobei der Ausgangs-Stromrichter (48) der Einspeisevorrichtung (2) wechselspannungsseitig mit der Sekundärwicklung (40) und gleichspannungsseitig mittels des Gleichspannungs-Zwischenkreises (4) mit gleichspannungsseitigen Anschlüssen des selbstgeführten Pulsstromrichters (6) verbunden sind, **dadurch gekennzeichnet, dass** der Mittelfrequenz-Transformator (38) eine zweite Sekundärwicklung (52) aufweist, die elektrisch parallel zu wechselspannungsseitigen Anschlüssen eines zweiten Ausgangs-Stromrichters (50) geschaltet ist, und dass diese beiden Ausgangs-Stromrichter (48,50) mittels zweier Schaltgeräte (54,56) gleichspannungsseitig in eine Reihen- oder Parallelschaltung konfigurierbar sind.

2. Mehrsystem-Traktionsstromrichter nach Anspruch 1, **dadurch gekennzeichnet, dass** die Schaltgeräte (54,56) Umschalter sind.

3. Mehrsystem-Traktionsstromrichter nach Anspruch 1, **dadurch gekennzeichnet, dass** der Ausgangs-Stromrichter (48,50) ein Vierquadrantensteller ist, dessen gleichspannungsseitige Anschlüsse mit einem Kondensator versehen sind.

4. Mehrsystem-Traktionsstromrichter nach Anspruch 1, **dadurch gekennzeichnet, dass** jede Stromrichter-Gruppe (34) netzseitig einem Vierquadrantensteller und transformatorseitig einen Resonanz-Stromrichter aufweist, wobei dieser Resonanz-Stromrichter und der Vierquadrantensteller gleichspannungsseitig elektrisch parallel geschaltet sind.

5. Mehrsystem-Traktionsstromrichter nach Anspruch 4, **dadurch gekennzeichnet, dass** der Resonanz-Stromrichter eine Halbbrücke, eine Reihenschaltung zweier Kondensatoren und einen Serienkondensator aufweist, wobei die Reihenschaltung elektrisch zur Halbbrücke geschaltet ist und der Serienkondensator mit einen Verbindungspunkt der beiden Kondensatoren verknüpft ist.

6. Mehrsystem-Traktionsstromrichter nach Anspruch 4, **dadurch gekennzeichnet, dass** der Resonanz-Stromrichter eine Halbbrücke und eine Reihenschaltung zweier Kondensatoren aufweist, wobei die Reihenschaltung elektrisch parallel zur Halbbrücke geschaltet ist und ein Verbindungspunkt der beiden Kondensatoren und ein Ausgang der Halbbrücke jeweils einen Ausgangs-Anschluss dieses Resonanz-Stromrichters bilden.

## Claims

1. Multi-system traction power converter with a network-side feed device (2), a load-side self-commutated pulse power converter (6) and a direct voltage intermediate circuit (4), wherein this feed device (2) has a plurality of power converter groups (34), an average frequency transformer (38) with a plurality of primary windings (36) and a secondary winding (40) and an output power converter (48), wherein these power converter groups (45) are electrically connected in series on the network side and are each linked with a primary winding (36) on the transformer side, wherein the output power converter (48) of the feed device (2) is connected on the alternating voltage side with the secondary winding (40) and on the direct voltage side by means of the direct voltage intermediate circuit (4) with direct voltage-side terminals of the self-commutated pulse power converter (6), **characterised in that** the average frequency transformer (38) has a second secondary winding (52), which is electrically connected in parallel with alternating voltage-side terminals of a second output power converter (50) and that these two output power converters (48, 50) can be configured on the direct voltage side in a series or parallel circuit by means of two switching apparatuses (54, 56).

2. Multi-system traction power converter according to claim 1, **characterised in that** the switching apparatuses (54, 56) are changeover switches.

3. Multi-system traction power converter according to claim 1, **characterised in that** the output power converter (48, 50) is a four quadrant chopper, the direct voltage-side terminals of which are provided with a capacitor.

4. Multi-system traction power converter according to claim 1, **characterised in that** each power converter group (34) has a four quadrant chopper on the network side and a resonance power converter on the transformer side, wherein this resonance power converter and the four quadrant chopper are electrically connected in parallel on the direct voltage side.

5. Multi-system traction power converter according to claim 4, **characterised in that** the resonance power converter has a half bridge, a series circuit of two capacitors and a series capacitor, wherein the series circuit is electrically connected with the half bridge and the series capacitor is linked with a connection point of the two capacitors.

6. Multi-system traction power converter according to claim 4, **characterised in that** the resonance power converter has a half bridge and a series circuit of two capacitors, wherein the series circuit is electrically connected in parallel with the half bridge and a connection point of the two capacitors and an output of the half bridge each form an output terminal of this resonance power converter.

## Revendications

1. Convertisseur de courant de traction à plusieurs systèmes, comprenant un système (2) d'injection du côté du réseau, un convertisseur (6) à impulsions à commutation automatique du côté de la charge et un circuit (4) intermédiaire à tension continue, ce système (2) d'injection ayant une pluralité de groupes (34) de convertisseurs, un transformateur (38) de moyenne fréquence, ayant une pluralité d'enroulements (36) primaires et un enroulement (40) secondaire, et un convertisseur (48) de sortie, ces groupes (34) de convertisseurs étant montés électriquement en série du côté du réseau et étant combinés du côté du transformateur, chacun à un enroulement (36) primaire, le convertisseur (48) de sortie du système (2) d'injection étant relié, du côté de la tension alternative, à l'enroulement (40) secondaire et, du côté de la tension continue, au moyen du circuit (4) intermédiaire à tension continue, à des bornes du côté de la tension continue du convertisseur (6) à impulsions à commutation automatique, **caractérisé en ce que** le transformateur (38) de moyenne fréquence a un deuxième enroulement (52) secondaire, qui est monté électriquement en parallèle avec des bornes, du côté de la tension alternative, d'un deuxième convertisseur (50) de sortie et **en ce que** ces deux convertisseurs (48, 50) de sortie peuvent être configurés en un circuit en série ou en parallèle, du côté de la tension continue, au moyen de deux appareils (54, 56) de commutation.

2. Convertisseur de courant de traction à plusieurs systèmes suivant la revendication 1, **caractérisé en ce que** les appareils (54, 56) de commutation sont des commutateurs.

3. Convertisseur de courant de traction à plusieurs systèmes suivant la revendication 1, **caractérisé en ce que** le convertisseur (48, 50) de courant de sortie est un régleur à quatre cadrans, dont les bornes, du côté de la tension continue, sont pourvues d'un condensateur.

4. Convertisseur de courant de traction à plusieurs systèmes suivant la revendication 1, **caractérisé en ce que** chaque groupe (34) de convertisseurs de courant a, du côté du réseau, un régleur à quatre cadrans et, du côté du transformateur, un convertisseur de résonance, ce convertisseur de résonance et le régleur à quatre cadrans étant montés en parallèle électriquement du côté de la tension continue.

5. Convertisseur de courant de traction à plusieurs systèmes suivant la revendication 4, **caractérisé en ce que** le convertisseur de résonance a un demi-pont, un circuit série de deux condensateurs et un condensateur série, dans lequel le circuit série est monté électriquement avec le demi-pont et le condensateur série est combiné à un point de liaison des deux condensateurs.

6. Convertisseur de courant de traction à plusieurs systèmes suivant la revendication 4, **caractérisé en ce que** le convertisseur de résonance a un demi-pont et un circuit série de deux condensateurs, le circuit série étant monté en parallèle électriquement avec le demi-pont et un point de liaison des deux condensateurs et une sortie du demi-pont formant chacune une borne de sortie de ce convertisseur de résonance.
